# EUROPEAN PATENT SPECIFICATION

(11) **EP 2 695 851 B1**
(45) Date of publication and mention of the grant of the patent: **08.01.2020**
(21) Application number: 12005747.6
(22) Date of filing: 08.08.2012
(51) Int. Cl.: C01B 3/04

(54) **Hydrogen generation from ammonia borane**
Wasserstofferzeugung aus Amminboran
Procédé de production d'hydrogène à partir de borazane

(43) Date of publication of application: 12.02.2014
(73) Proprietor: ArianeGroup GmbH, 82024 Taufkirchen (DE)
(72) Inventor: Godula-Jopek, Agata, 82024 Taufkirchen (DE); Brandstetter, Armin, 81927 München (DE); Stobinski, Leszek, 03-337 Warschau (PL)
(74) Representative: Marschall, Stefan

(56) References cited:
- US-A1- 2007 128 475
- US-A1- 2012 174 984
- ANNA GUTOWSKA ET AL: "Nanoscaffold Mediates Hydrogen Release and the Reactivity of Ammonia Borane", ANGEWANDTE CHEMIE INTERNATIONAL EDITION, vol. 44, no. 23, 6 June 2005 (2005-06-06), pages 3578-3582, XP055046468, ISSN: 1433-7851, DOI: 10.1002/anie.200462602
- SAGHAR SEPEHRI ET AL: "Tuning dehydrogenation temperature of carbon-ammonia borane nanocomposites", JOURNAL OF MATERIALS CHEMISTRY, vol. 18, no. 34, 1 January 2008 (2008-01-01), pages 4034-4037, XP055046478, ISSN: 0959-9428, DOI: 10.1039/b808511k
- ZEYNEP KURBAN ET AL: "A Solution Selection Model for Coaxial Electrospinning and Its Application to Nanostructured Hydrogen Storage Materials", JOURNAL OF PHYSICAL CHEMISTRY PART C: NANOMATERIALS AND INTERFACES, AMERICAN CHEMICAL SOCIETY, US, vol. 114, no. 49, 16 December 2010 (2010-12-16), pages 21201-21213, XP007918305, ISSN: 1932-7447, DOI: 10.1021/JP107871V [retrieved on 2010-11-16]
- WILLIAM OSBORN ET AL: "Dehydrogenation behavior of ball-milled ammonia borane and lithium hydride mixtures", SCRIPTA MATERIALIA, ELSEVIER, AMSTERDAM, NL, vol. 64, no. 8, 20 December 2010 (2010-12-20), pages 737-740, XP028360177, ISSN: 1359-6462, DOI: 10.1016/J.SCRIPTAMAT.2010.12.023 [retrieved on 2010-12-24]

## Description

The present invention is directed to a method for generating hydrogen from ammonia borane as well as an ammonia borane-containing suspension and the use of ammonia borane particles having a mean particle size *d*₅₀ of from 1 to 1 000 nm for generating hydrogen.

Amine borane complexes are widely used as hydrogen storage materials. The particular interest for such complexes resides in the fact that their volumetric hydrogen densities are positive and, thus, allow the storage of large quantities of hydrogen in a small volume. In this regard, a wide variety of amine borane complexes are known of which ammonia borane contains of about 19.5 wt.-% of hydrogen in a molecule and is thus considered as potential candidate for use as hydrogen storage material. The hydrogen release is initiated by contacting the ammonia borane with water or by heating the ammonia borane such that the borane decomposes in accordance with formula I:

NH₃BH₃ + Q →(3-x) H₂ + NHₓBHₓ (x=0-2) I

US 2012/0174984 A1, for example,discloses a method for releasing hydrogen comprising heating a slurry of ammonia borane in silicone oil. The existing hydrogen storage materials comprising ammonia borane are typically provided in solid forms such as granules or pressed into pellets. One problem with granules and pellets however is that these compacted forms severely decrease the available surface area of the ammonia borane particles and thus also results in decreased hydrogen release efficiency. Consequently, a high demand of hydrogen requires large amounts of pellets or granules. Furthermore, due to the salty nature of ammonia borane its use in mechanical devices is challenging. Also, the storage, transportation and/or handling of ammonia borane in the form of pellets, granules or powders are only possible under high safety requirements due to the danger of cracking or changing of the form.

In the art, several approaches for improving the hydrogen release from ammonia borane have been proposed. For example, US 2007/0172417 A1 describes durable, highly active supported catalysts and systems for hydrogen generation from, for example, the hydrolysis of boron hydride compounds. US 2006/0225350 A1 relates to systems for generating hydrogen gas from reformable fuels and to methods for monitoring and controlling hydrogen generation. It is further described that e.g. hydrocarbons and boron hydrides may be used as reformable fuels.

Though the known methods for generating hydrogen provide relatively high amounts of hydrogen, the hydrogen release from ammonia borane still needs to be improved.

Therefore, there is a continuous need for alternative methods for generating hydrogen from ammonia borane, which provide a better efficiency than existing hydrogen generating systems and effectively improve and facilitate the storage, handling, dosing and/or transportation of ammonia borane.

Accordingly, it is an object of the present invention to provide an efficient method for generating hydrogen from ammonia borane. Furthermore, it is an object of the present invention that a quick and highly controlled release of hydrogen from ammonia borane is ensured. In addition thereto, it is an object of the present invention that the safety requirements during storage, transportation, dosing and/or handling can be reduced and, thus, also reduces the costs for hydrogen generation. Further objects can be gathered from the following description of the invention.

This and other objects are solved by the subject-matter of the present invention. According to a first aspect of the present invention, a method for generating hydrogen from ammonia borane is provided, wherein the method comprises at least the steps of:
a) providing at least one water-free liquid medium,
b) providing ammonia borane particles having a mean particles size *d*₅₀ of from 1 to 1 000 nm
c) contacting the water-free liquid medium of step a) with the ammonia borane particles of step b) such as to obtain an ammonia borane-containing suspension,
d) heating the ammonia borane-containing suspension obtained in step c) at a temperature of from 90 to 200 °C.

The inventors surprisingly found that the foregoing method for generating hydrogen from ammonia borane according to the present invention is highly efficient and allows a quick and controlled release of hydrogen under safe requirements. More precisely, the inventors found that the release of hydrogen from ammonia borane can be highly improved by heating an ammonia borane-containing suspension comprising ammonia borane particles having a mean particle size *d*₅₀ of from 1 to
1 000 nm at a temperature of from 90 to 200 °C.

It should be understood that for the purposes of the present invention, the following terms have the following meanings:
In accordance with the present invention, the term "water-free" liquid medium refers to any organic and/or inorganic liquid having a water content of below 1.0 Vol.-%, preferably of below 0.5 Vol.-%, more preferably of below 0.1 Vol.-% and most preferably of below 0.05 Vol.-%, based on the total volume of the liquid medium. In one embodiment of the present invention, the water-free liquid medium is without any water content.

A "suspension" in the meaning of the present invention comprises insoluble ammonia borane particles dispersed in a liquid medium and optionally further additives and usually contains large amounts of ammonia borane particles and, thus, is more viscous and generally of higher density than the liquid medium from which it is formed. It is accepted in the art that the general term "dispersion" inter alia covers "suspensions" as a specific type of dispersion.

The term "mean particle size *d*₅₀" in the meaning of the present invention is defined as the size at which 50 % (the median point) of the particle volume or mass is accounted for by particles having a diameter equal to the specified value. For determining the mean particle size *d*₅₀ value for particles having a *d*₅₀ value a scanning electron microscope (SEM, Hitachi S-5500) can be used. The method and the instrument are known to the skilled person and are commonly used to determine particle sizes of particulate materials.

According to another aspect of the present invention, an ammonia borane-containing suspension comprising a) at least one water-free liquid medium and b) ammonia borane particles having a mean particles size *d*₅₀ of from 1 to 1 000 nm is provided. It is preferred that the suspension comprises an amount of ammonia borane in the range from 40 to 80 wt.-%, preferably in the range from 50 to 70 wt.-%, based on the total weight of the suspension. According to a further aspect, the present invention refers to ammonia borane particles having a mean particle size *d*₅₀ of from 1 to 1 000 nm for generating hydrogen.

According to one embodiment of the inventive method, the at least one water-free liquid medium is free of metal salts and/or non-reductive agents.

According to another embodiment of the inventive method, the at least one water-free liquid medium is an organic and/or inorganic liquid medium, preferably the at least one water-free liquid medium is selected from the group comprising silicon oil, glycerine, ethylene glycol, hexane, petrol and mixtures thereof.

According to yet another embodiment of the inventive method, the ammonia borane particles have a mean particle size *d*₅₀ of from 1 to 750 nm, preferably of from 1 to 500 nm, more preferably of from 1 to 250 nm, even more preferably of from 1 to 150 nm and most preferably of from 1 to 100 nm.

According to one embodiment of the inventive method, the ammonia borane particles are provided in the form of a powder or granules.

According to another embodiment of the inventive method, contacting step c) is carried out under mixing.

According to yet another embodiment of the inventive method, contacting step c) is carried out such that the ammonia borane-containing suspension comprises an amount of ammonia borane in the range from 40 to 80 wt.-%, based on the total weight of the suspension.

According to one embodiment of the inventive method, contacting step c) is carried out such that the ammonia borane-containing suspension comprises an amount of ammonia borane in the range from 50 to 70 wt.-%, based on the total weight of the suspension.

According to another embodiment of the inventive method, heating step d) is carried out at a temperature of from 100 to 150 °C.

According to yet another embodiment of the inventive method, heating step d) is carried out under atmospheric pressure.

According to one embodiment of the inventive method, the method is carried out in the absence of catalysts.

As set out above, the inventive method for generating hydrogen from ammonia borane comprises the steps a), b), c) and d). In the following, it is referred to further details of the present invention and especially the foregoing steps of the inventive method for generating hydrogen from ammonia borane.

According to step a) of the instant method for generating hydrogen from ammonia borane, at least one water-free liquid medium is provided. There are no specific restrictions regarding the at least one water-free liquid medium provided that the at least one liquid medium is water-free.

Accordingly, the at least one water-free liquid medium may be any kind of organic and/or inorganic liquid medium. For example, the at least one water-free liquid medium may be any kind of organic and/or inorganic liquid medium having a water content of below 1.0 Vol.-%, preferably of below 0.5 Vol.-%, more preferably of below 0.1 Vol.-% and most preferably of below 0.05 Vol.-%, based on the total volume of the at least one water-free liquid medium.

In one embodiment of the present invention, the at least one water-free liquid medium is an organic and/or inorganic liquid medium. For example, the at least one water-free liquid medium is selected from the group comprising silicon oil, glycerine, ethylene glycol, hexane, petrol and mixtures thereof. For example, the at least one water-free liquid medium is silicon oil.

For example, the at least one water-free liquid medium is an organic and inorganic liquid medium. Alternatively, the at least one water-free liquid medium is an organic or inorganic liquid medium. In one embodiment of the present invention, the at least one water-free liquid medium is an inorganic liquid medium.

If the at least one water-free liquid medium is an inorganic liquid medium, the liquid medium is preferably silicone oil.

If the at least one water-free liquid medium is an organic liquid medium, the liquid medium is selected from the group comprising glycerine, ethylene glycol, hexane, petrol and mixtures thereof.

In one embodiment of the present invention, the at least one water-free liquid medium is silicon oil.

The term "at least one" water-free liquid medium means that one or more kinds of liquid medium can be provided.

Accordingly, it should be noted that the at least one water-free liquid medium may be a mixture of two or more kinds of liquid mediums. For example, if the at least one water-free liquid medium is a mixture of two or more liquid mediums, one liquid medium is silicon oil, while the second or further liquid medium is selected from the group comprising glycerine, ethylene glycol, hexane, petrol and mixtures thereof.

It is preferred that the at least one water-free liquid medium comprises silicon oil in an amount of at least 50 Vol.-%, more preferably of at least 60 Vol.-%, even more preferable of at least 70 Vol.-% and most preferably of at least 80 Vol.-%, based on the total volume of the at least one water-free liquid medium provided in step a). For example, the at least one water-free liquid medium comprises silicon oil in an amount of at least 90 Vol.-% or of at least 98 Vol.-%, based on the total volume of the at least one water-free liquid medium provided in step a).

In this regard, it is appreciated that even if the at least one water-free liquid medium comprises a mixture of water-free liquid mediums, the overall water content of said mixture does not exceed 1.0 Vol.-%, based on the total volume of the at least one water-free liquid medium. It is preferred that the overall water content of said mixture is of below 0.5 Vol.-%, more preferably of below 0.1 Vol.-% and most preferably of below 0.05 Vol.-%, based on the total volume of the at least one water-free liquid medium.

In one embodiment of the present invention, the at least one water-free liquid medium provided in step a) is one kind of liquid medium. For example, the at least one water-free liquid medium provided in step a) consists of silicon oil.

In one embodiment of the present invention, the at least one water-free liquid medium provided in step a) is free of metal salts. In accordance with the present invention, the term "free of metal salts" refers to a liquid medium having a salts content of below 0.1 wt.-%, preferably of below 0.05 wt.-%, more preferably of below 0.01 wt.-% and most preferably of below 0.005 wt.-%, based on the total weight of the at least one water-free liquid medium.

For example, the at least one water-free liquid medium is free of hydroxide salts such as sodium hydroxide, potassium hydroxide, lithium hydroxide and mixtures thereof.

Additionally or alternatively, the at least one water-free liquid medium provided in step a) is free of non-reductive agents. In accordance with the present invention, the term "non-reductive" refers to a liquid medium comprising reductive components in an amount of below 0.1 wt.-%, preferably of below 0.05 wt.-%, more preferably of below 0.01 wt.-% and most preferably of below 0.005 wt.-%, based on the total weight of the at least one water-free liquid medium. In one embodiment of the present invention, the water-free liquid medium is free of any non-reductive agents.

Typically, the at least one water-free liquid medium according to the present invention has a viscosity at room temperature in the range from 0.3 to 30 000 mPa·s, preferably in the range from 0.3 to 20 000 mPa·s and more preferably in the range from 0.3 to 10 000 mPa·s, as measured with a Brookfield viscometer. For example, the at least one water-free liquid medium according to the present invention has a viscosity at room temperature in the range from 100 to 10 000 mPa·s and more preferably in the range from 500 to 8 000 mPa·s, e.g. of about 5 000 mPa·s.

According to step b) of the method of the present invention, ammonia borane particles are provided.

The term "ammonia borane particles" in the meaning of the present invention refers to particles merely composed of ammonia borane (NH₃BH₃), also named borazane. Accordingly, the ammonia borane particles comprise, preferably consist of, ammonia borane.

However, it is not excluded that the ammonia borane particles may comprise smaller amounts of other components provided that such other components do not hinder the hydrogen generation by heating the ammonia borane-containing suspension.

If the ammonia borane particles comprise smaller amounts of other components, such other components are present in the ammonia borane particles in an amount of below 1 wt.-%, preferably of below 0.75 wt.-%, more preferably of below 0.5 wt.-% and most preferably of below 0.25 wt.-%, based on the total weight of the ammonia borane particles.

Accordingly, the ammonia borane particles comprise ammonia borane in an amount of at least 99 wt.-%, preferably of at least 99.25 wt.-%, more preferably of at least 99.5 wt.-% and most preferably of at least 99.75 wt.-%, based on the total weight of the ammonia borane particles. In one embodiment of the present invention, the ammonia borane particles comprise ammonia borane in an amount of about 100 wt.-%, based on the total weight of the ammonia borane particles.

The other components may be borohydrides being different from ammonia borane. For example, such other components may be selected from sodium borohydride, lithium borohydride, potassium borohydride, rubidium borohydride, sodium hydroxide, lithium hydroxide, potassium hydroxide, rubidium hydroxide and mixtures thereof.

It is one specific requirement of the inventive method that the ammonia borane particles provided in step b) have a mean particle size *d*₅₀ of from 1 to 1 000 nm, as measured using scanning electron microscopy (SEM).

In one embodiment of the present invention, the ammonia borane particles provided in step b) have a mean particle size *d*₅₀ of from 1 to 750 nm, preferably of from 1 to 500 nm, more preferably of from 1 to 250 nm and even more preferably of from 1 to 150 nm, as measured using scanning electron microscopy (SEM). For example, the ammonia borane particles provided in step b) have a mean particle size *d*₅₀ of from 1 to 100 nm, as measured using scanning electron microscopy (SEM).

Additionally or alternatively, it should be noted that the ammonia borane particles provided in step b) may have a specific particle size distribution. In general, the ammonia borane particles provided in step b) have a *d*₉₈ of below 1 000 nm as measured by the well known technique of scanning electron microscopy. In one embodiment of the present invention, the ammonia borane particles provided in step b) have a *d*₉₈ in the range of from 1 to 750 nm, preferably of from 1 to 500 nm, more preferably of from 1 to 250 nm, even more preferably of from 1 to 150 nm.

Throughout the present document, the "particle size" of ammonia borane particles is described by its distribution of particle sizes. The value *d*ₓ represents the diameter relative to which x % by weight of the particles have diameters less than *d*ₓ. This means that the *d*₂₀ value is the particle size at which 20 wt.-% of all particles are smaller, and the *d*₇₅ value is the particle size at which 75 wt.-% of all particles are smaller. The *d*₉₈ value is thus the weight median particle size, i.e. 98 wt.-% of all grains are smaller than this particle size.

The ammonia borane particles can be provided in any appropriate solid form, e.g. in the form of granules or a powder. In one embodiment of the present invention, the ammonia borane particles are provided in the form of a powder.

If the ammonia borane particles are provided in the form of granules, the granules may be of various size and shape. However, in order to facilitate the dispersion of the ammonia borane particles in the at least one water-free liquid medium according to step c), it is preferred that the granules have a particle size *d*₅₀ of below 5 mm, more preferably of below 1 mm, even more preferably of below 750 µm and most preferably of below 500 µm, as measured using optical microscopy.

According to step c) of the present invention, the at least one water-free liquid medium of step a) is contacted with the ammonia borane particles of step b) for obtaining an ammonia borane-containing suspension.

In the method of the present invention, the contacting of the ammonia borane particles with the at least one water-free liquid medium is preferably carried out by mixing the ammonia borane particles with the at least one water-free liquid medium. "Mixing" in the sense of the present invention can be effected by any conventional mixing process known to the skilled person. Preferably, the mixing is carried out under continuous agitation or stirring in order to evenly contact the ammonia borane particles of step b) with the at least one water-free liquid medium of step a). Alternatively, the mixing is carried out under shaking conditions in order to evenly contact the ammonia borane particles in the ammonia borane-containing suspension obtained in step c) with the at least one water-free liquid medium of step a).

The ammonia borane particles are preferably added to the at least one water-free liquid medium in a quantity such that the amount of ammonia borane in the resulting ammonia borane-containing suspension in an amount of from 40 to 80 wt.-%, preferably of from 50 to 70 wt.-%, based on the total weight of the suspension obtained in step c). For example, the resulting ammonia borane-containing suspension comprises ammonia borane in an amount of from 55 to 65 wt.-%, like about 60 wt.-%, based on the total weight of the suspension obtained in step c).

Preferably, contacting step c) is carried at a temperature of at least 10 °C, preferably at least 15 °C, more preferably between 18 °C and 40 °C and most preferably between 18 °C and 30 °C. In one embodiment of the present invention, contacting step c) is carried out at room temperature, e.g. at a temperature of between 18 and 25 °C. Additionally or alternatively, contacting step c) is carried out at a constant temperature.

In one embodiment of the present invention, contacting step c) is carried out under atmospheric pressure.

After contacting step c) has been carried out, the ammonia borane-containing suspension thus obtained can be immediately subjected to method step d). Alternatively, the ammonia borane-containing suspension thus obtained can be stored and/or transported before being subjected to method step d) of the present invention.

In one embodiment of the present invention, the ammonia borane-containing suspension obtained in step c) can be stored at temperatures between 5°C and 40°C, more preferably between 10°C and 30°C and most preferably of about room temperature, for example, between 18°C and 25°C, before being subjected to method step e) of the present invention.

For example, the ammonia borane-containing suspension obtained in step c) can be stored for at least 1 hour, preferably of at least 24 hours, more preferably of at least 1 week, even more preferably of at least 1 month and most preferably of at least 6 months, before being subjected to method step d) of the present invention.

According to method step d) of the present invention, the ammonia borane-containing suspension obtained in step c) is heated at a temperature of from 90 to 200 °C.

In one embodiment of the present invention, heating step d) is carried out at a temperature of from 100 to 150 °C. For example, heating step d) is carried out at a temperature of from 100 to 140 °C.

In the method of the present invention, the heating of the ammonia borane-containing suspension in the sense of the present invention can be effected by any conventional heating process known to the skilled person. Preferably, the heating is carried out under continuous agitation or stirring in order to evenly distribute the heat within the ammonia borane-containing suspension obtained in step c). Alternatively, the heating is carried out under shaking conditions in order to evenly distribute the heat within the ammonia borane-containing suspension obtained in step c).

The time for which the ammonia borane-containing suspension is heated in step d) is not critical and thus not restricted to a specific time. However, in order to generate a sufficient amount of hydrogen from the ammonia borane-containing suspension obtained in step c), the suspension is heated for at least 5 min, preferably of at least 10 min, more preferably of at least 15 min and most preferably of at least 30 min.

In one embodiment of the present invention, heating step d) is carried out at a constant temperature. For example, the heating is carried out at a constant temperature of from 90 to 200 °C, preferably of from 100 to 150 °C, until no hydrogen generation from the ammonia borane-containing suspension is detectable anymore. In other words, the temperatures at the beginning of heating step d), during heating step d) and at the end of heating step d), as indicated by a severe reduction of hydrogen generation, are of about the same temperature. Preferably, the temperatures at the beginning of heating step d), during heating step d) and at the end of heating step d) differ of not more than 15 °C, more preferably not more than 10 °C and most preferably not more than 5 °C.

Alternatively, heating step d) is carried out at varying temperatures. For example, the heating is carried out at a temperature of from 90 to 200 °C until the hydrogen generation from the ammonia borane-containing suspension has started. After initiating the hydrogen generation from the ammonia borane-containing suspension the heating may be decreased to a temperature of below 90 °C. If required, i.e. if an increased hydrogen release from the ammonia borane-containing suspension is desired, the heating at a temperature of from 90 to 200 °C may be continued. In other words, the temperatures at the beginning of heating step d) and during heating step d) and/or at the end of heating step d) may vary. Preferably, the temperatures at the beginning of heating step d) and during heating step d) and/or at the end of heating step d) differ by more than 15 °C, more preferably by more than 20 °C and most preferably by more than 25 °C.

In one embodiment of the present invention, heating step d) is carried out during and after step c). Alternatively, heating step d) is carried out during or after step c). For example, heating step d) is carried out after step c).

The ammonia borane-containing suspension obtained in step c) is preferably subjected to heating step d) within 6 months after contacting step c) has been carried out, more preferably within 1 month, even more preferably within 1 week and most preferably within 24 hours. In particular, the ammonia borane-containing suspension obtained in step c) is heated within 12 hours after contacting step c) has been carried out, preferably within 6 hours, more preferably within 4 hours, even more preferably within 2 hours and most preferably within 1 hour.

In one embodiment of the present invention, heating step d) is carried out under atmospheric pressure.

In one preferred embodiment of the present invention, the method is carried out in the absence of catalysts. In particular, the method is carried out in the absence of catalysts selected from metal particles or metal salts.

For example, the instant method is carried out in the absence of catalysts comprising metal particles selected from the group comprising copper, silver, gold, iron, nickel, cobalt, palladium, platinum, chromium, tungsten and mixtures thereof. Additionally or alternatively, the instant method is carried out in the absence of catalysts comprising metal salts selected from the group comprising iron(II) chloride, iron(III) chloride, iron(II) nitrate, iron(III) nitrate, iron(II) acetate, iron(III) acetate, copper chloride, copper nitrate, copper acetate, palladium chloride, palladium nitrate, palladium acetate, gold chloride, gold nitrate, gold acetate, platinum(II) chloride, platinum(II) nitrate, platinum(II) acetate, platinum(IV) chloride, platinum(IV) nitrate, platinum(IV) acetate, nickel(II) chloride, nickel(III) chloride, cobalt(II) chloride, cobalt(III) chloride, chromium(III) chloride, cadmium chloride and mixtures thereof.

The hydrogen generation from ammonia borane in accordance with the present invention is clearly improved in comparison to corresponding methods implementing conventional powders, pellets and granules, i.e. by contacting ammonia borane particles having mean particle size *d*₅₀ values of above 1 µm in the absence of at least one water-free liquid medium with water or by heating ammonia borane particles having mean particle size *d*₅₀ values of above 1 µm. Furthermore, the ammonia borane-containing suspension obtained in step c) is highly protected against unwanted decomposition and allows for reduced safety requirements during storage, transportation, dosing and/or handling and, thus, also reduces the costs for hydrogen generation. In particular, it is to be noted that the ammonia borane-containing suspension obtained in step c) can be used under harsh conditions as it is not subject to fracturing as e.g. pellets or granules, and is therefore suitable for any field application such as military applications. In addition thereto, the instant method ensures a quick and highly controlled release of hydrogen and thus provides an efficient method for generating hydrogen from ammonia borane.

In view of the very good results obtained regarding the generation of hydrogen as defined above, a further aspect of the present invention refers to an ammonia borane-containing suspension comprising a) at least one water-free liquid medium and b) ammonia borane particles having a mean particles size *d*₅₀ of from 1 to 1 000 nm. It is preferred that the ammonia borane-containing suspension comprises an amount of ammonia borane in the range from 40 to 80 wt.-%, preferably in the range from 50 to 70 wt.-%, based on the total weight of the suspension.

With regard to the definition of the ammonia borane-containing suspension, the at least one water-free liquid medium, the ammonia borane, and preferred embodiments thereof, reference is made to the comments provided above when discussing method steps a), b) and c).

A further aspect of the present invention is the use of ammonia borane particles having a mean particle size *d*₅₀ of from 1 to 1 000 nm for generating hydrogen.

With regard to the definition of the ammonia borane particles, and preferred embodiments thereof, reference is made to the comments provided above when discussing method step b).

## Claims

1. A method for generating hydrogen from ammonia borane, the method comprising at least the steps of:
a) providing at least one water-free liquid medium,
b) providing ammonia borane particles having a mean particles size d50 of from 1 to 1 000 nm,
c) contacting the water-free liquid medium of step a) with the ammonia borane particles of step b) such as to obtain an ammonia borane-containing suspension,
d) heating the ammonia borane-containing suspension obtained in step c) at a temperature of from 90 to 200 °C.

2. The method according to claim 1, wherein the at least one water-free liquid medium is free of metal salts and/or non-reductive agents.

3. The method according to claim 1 or 2, wherein the at least one water-free liquid medium is an organic and/or inorganic liquid medium, preferably the at least one water-free liquid medium is selected from the group comprising silicon oil, glycerine, ethylene glycol, hexane, petrol and mixtures thereof.

4. The method according to any one of claims 1 to 3, wherein the ammonia borane particles have a mean particle size *d*₅₀ of from 1 to 750 nm, preferably of from 1 to 500 nm, more preferably of from 1 to 250 nm, even more preferably of from 1 to 150 nm and most preferably of from 1 to 100 nm.

5. The method according to any one of claims 1 to 4, wherein the ammonia borane particles are provided in the form of a powder or granules.

6. The method according to any one of claims 1 to 5, wherein contacting step c) is carried out under mixing.

7. The method according to any one of claims 1 to 6, wherein contacting step c) is carried out such that the ammonia borane-containing suspension comprises an amount of ammonia borane in the range from 40 to 80 wt.-%, based on the total weight of the suspension.

8. The method according to any one of claims 1 to 7, wherein contacting step c) is carried out such that the ammonia borane-containing suspension comprises an amount of ammonia borane in the range from 50 to 70 wt.-%, based on the total weight of the suspension.

9. The method according to any one of claims 1 to 8, wherein heating step d) is carried out at a temperature of from 100 to 150 °C.

10. The method according to any one of claims 1 to 9, wherein heating step d) is carried out under atmospheric pressure.

11. The method according to any one of claims 1 to 10, wherein the method is carried out in the absence of catalysts.

12. An ammonia borane-containing suspension comprising a) at least one water-free liquid medium as defined in any one of claims 1 to 3 and b) ammonia borane particles having a mean particle size *d*₅₀ of from 1 to 1 000 nm as defined in any one of claims 1 or 4 to 5.

13. The ammonia borane-containing suspension of claim 12, wherein the suspension comprises an amount of ammonia borane in the range from 40 to 80 wt.-%, preferably in the range from 50 to 70 wt.-%, based on the total weight of the suspension.

14. Use of ammonia borane particles having a mean particle size *d*₅₀ of from 1 to 1 000 nm as defined in any one of claims 1 or 4 to 5 for generating hydrogen.

## Patentansprüche

1. Verfahren zum Erzeugen von Wasserstoff aus Ammoniakboran, wobei das Verfahren mindestens die Schritte umfasst:
a) Bereitstellen mindestens eines wasserfreien flüssigen Mediums,
b) Bereitstellen von Ammoniakboran-Teilchen mit einer mittleren Teilchengröße d50 von 1 bis 1.000 nm,
c) Inkontaktbringen des wasserfreien flüssigen Mediums von Schritt a) mit den Ammoniakboran-Teilchen von Schritt b), um eine Ammoniakboran-haltige Suspension zu gewinnen,
d) Erhitzen der Ammoniakboran-haltigen Suspension, die in Schritt c) gewonnen wird, bei einer Temperatur von 90 bis 200 °C.

2. Verfahren nach Anspruch 1, wobei das mindestens eine wasserfreie flüssige Medium frei von Metallsalzen und/oder nichtreduzierenden Mitteln ist.

3. Verfahren nach Anspruch 1 oder 2, wobei das mindestens eine wasserfreie flüssige Medium ein organisches und/oder anorganisches flüssiges Medium ist, wobei das mindestens eine wasserfreie flüssige Medium bevorzugt aus der Gruppe ausgewählt wird, die Silikonöl, Glycerin, Ethylenglycol, Hexan, Benzin und Gemische davon umfasst.

4. Verfahren nach einem von Anspruch 1 bis 3, wobei die Ammoniakboran-Teilchen eine mittlere Teilchengröße *d*₅₀ von 1 bis 750 nm, bevorzugt von 1 bis 500 nm, bevorzugter von 1 bis 250 nm, noch bevorzugter von 1 bis 150 nm und am meisten bevorzugt von 1 bis 100 nm, aufweisen.

5. Verfahren nach einem von Anspruch 1 bis 4, wobei die Ammoniakboran-Teilchen in Form eines Pulvers oder von Granalien bereitgestellt werden.

6. Verfahren nach einem von Anspruch 1 bis 5, wobei der Schritt des Inkontaktbringens c) unter Mischen durchgeführt wird.

7. Verfahren nach einem von Anspruch 1 bis 6, wobei der Schritt des Inkontaktbringens c) so durchgeführt wird, dass die Ammoniakboran-haltige Suspension eine Menge von Ammoniakboran, bezogen auf das Gesamtgewicht der Suspension, im Bereich von 40 bis 80 Gew.-% umfasst.

8. Verfahren nach einem von Anspruch 1 bis 7, wobei der Schritt des Inkontaktbringens c) so durchgeführt wird, dass die Ammoniakboran-haltige Suspension eine Menge von Ammoniakboran, bezogen auf das Gesamtgewicht der Suspension, im Bereich von 50 bis 70 Gew.-% umfasst.

9. Verfahren nach einem von Anspruch 1 bis 8, wobei der Schritt des Erhitzens d) bei einer Temperatur von 100 bis 150 °C durchgeführt wird.

10. Verfahren nach einem von Anspruch 1 bis 9, wobei der Schritt des Erhitzens d) unter Atmosphärendruck durchgeführt wird.

11. Verfahren nach einem von Anspruch 1 bis 10, wobei das Verfahren in Abwesenheit von Katalysatoren durchgeführt wird.

12. Ammoniakboran-haltige Suspension, umfassend a) mindestens ein wasserfreies flüssiges Medium, wie in einem von Anspruch 1 bis 3 definiert, und b) Ammoniakboran-Teilchen mit einer mittleren Teilchengröße *d*₅₀ von 1 bis 1.000 nm, wie in einem von Anspruch 1 oder 4 bis 5 definiert.

13. Ammoniakboran-haltige Suspension nach Anspruch 12, wobei die Suspension eine Menge von Ammoniakboran, bezogen auf das Gesamtgewicht der Suspension, im Bereich von 40 bis 80 Gew.-%, bevorzugt im Bereich von 50 bis 70 Gew.-%, umfasst.

14. Benutzung von Ammoniakboran-Teilchen mit einer mittleren Teilchengröße *d*₅₀ von 1 bis 1.000 nm, wie in einem von Anspruch 1 oder 4 bis 5 definiert, zum Erzeugen von Wasserstoff.

## Revendications

1. Procédé pour générer de l'hydrogène à partir de borane d'ammoniac, le procédé comprenant au moins les étapes consistant à :
a) fournir au moins un milieu liquide exempt d'eau,
b) fournir des particules de borane d'ammoniac ayant une taille de particule moyenne d50 de 1 à 1 000 nm,
c) mettre en contact le milieu liquide exempt d'eau de l'étape a) avec les particules de borane d'ammoniac de l'étape b) de sorte à obtenir une suspension contenant du borane d'ammoniac,
d) chauffer la suspension contenant du borane d'ammoniac obtenue à l'étape c) à une température de 90 à 200 °C.

2. Procédé selon la revendication 1, dans lequel l'au moins un milieu liquide exempt d'eau est exempt de sels métalliques et/ou d'agents non réducteurs.

3. Procédé selon la revendication 1 ou 2, dans lequel l'au moins un milieu liquide exempt d'eau est un milieu liquide organique et/ou inorganique, de préférence l'au moins un milieu liquide exempt d'eau est sélectionné dans le groupe constitué par l'huile de silicone, la glycérine, l'éthylène glycol, l'hexane, le pétrole et des mélanges de ceux-ci.

4. Procédé selon l'une quelconque des revendications 1 à 3, dans lequel les particules de borane d'ammoniac ont une taille de particule moyenne *d*₅₀ de 1 à 750 nm, de préférence de 1 à 500 nm, plus préférablement de 1 à 250 nm, encore plus préférablement de 1 à 150 nm et de manière préférée entre toutes de 1 à 100 nm.

5. Procédé selon l'une quelconque des revendications 1 à 4, dans lequel les particules de borane d'ammoniac sont fournies sous la forme d'une poudre ou de granulés.

6. Procédé selon l'une quelconque des revendications 1 à 5, dans lequel l'étape de mise en contact c) est réalisée sous mélange.

7. Procédé selon l'une quelconque des revendications 1 à 6, dans lequel l'étape de mise en contact c) est réalisé de sorte que la suspension contenant du borane d'ammoniac comprend une quantité de borane d'ammoniac comprise dans la plage allant de 40 à 80 % en poids, sur la base du poids total de la suspension.

8. Procédé selon l'une quelconque des revendications 1 à 7, dans lequel l'étape de mise en contact c) est réalisé de sorte que la suspension contenant du borane d'ammoniac comprend une quantité de borane d'ammoniac comprise dans la plage allant de 50 à 70 % en poids, sur la base du poids total de la suspension.

9. Procédé selon l'une quelconque des revendications 1 à 8, dans lequel l'étape de chauffage d) est réalisée à une température comprise dans la plage allant de 100 à 150 °C.

10. Procédé selon l'une quelconque des revendications 1 à 9, dans lequel l'étape de chauffage d) est réalisée sous pression atmosphérique.

11. Procédé selon l'une quelconque des revendications 1 à 10, dans lequel le procédé est réalisé en l'absence de catalyseurs.

12. Suspension contenant du borane d'ammoniac comprenant a) au moins un milieu liquide exempt d'eau tel que défini selon l'une quelconque des revendications 1 à 3 et b) des particules de borane d'ammoniac ayant une taille de particule moyenne *d*₅₀ de 1 à 1 000 nm telles que définies selon l'une quelconque des revendications 1 ou 4 à 5.

13. Suspension contenant du borane d'ammoniac selon la revendication 12, dans laquelle la suspension comprend une quantité de borane d'ammoniac comprise dans la plage allant de 40 à 80 % en poids, de préférence dans la plage allant de 50 à 70 % en poids, sur la base du poids total de la suspension.

14. Utilisation de particules de borane d'ammoniac ayant une taille de particule moyenne *d*₅₀ de 1 à 1 000 nm telles que définies selon l'une quelconque des revendications 1 ou 4 à 5 pour générer de l'hydrogène.
